(19) Europäisches Patentamt
European Patent Office
Office européen des brevets

(11) **EP 2 591 843 A1**

(12) **EUROPEAN PATENT APPLICATION**

(43) Date of publication:
**15.05.2013 Bulletin 2013/20**

(51) Int Cl.:
**B01D 53/32** (2006.01)　　　**B01D 53/94** (2006.01)

(21) Application number: **12189565.0**

(22) Date of filing: **23.10.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **09.11.2011 TW 100140823**

(71) Applicant: **National Tsing Hua University Hsinchu City (TW)**

(72) Inventor: **Huang, Ta-Jen Hsinchu City (TW)**

(74) Representative: **2K Patentanwälte Blasberg Kewitz & Reichel Partnerschaft Corneliusstraße 18 60325 Frankfurt a. M. (DE)**

(54) **Electro-catalytic tube for exhaust emissions control**

(57) An electro-catalytic tube for controlling exhaust emissions, which adopts to purify a lean-burn exhaust, comprises a tube, an anode layer and a cathode layer. The tube is composed of a solid oxide layer. The solid oxide layer includes an enclosed chamber, an inner wall formed inside the enclosed chamber, and an outer wall formed outside the enclosed chamber. The anode layer and the cathode layer are respectively coated on the inner wall and the outer wall of the solid oxide layer. The enclosed chamber has a reducing environment. The reducing environment in the enclosed chamber and the oxidizing environment of the lean-burn exhaust facilitate an electromotive force to form between the anode layer and the cathode layer to promote catalytic decomposition of nitrogen oxides of the exhaust on the cathode layer. Accordingly, the electro-catalytic tube has advantage of compact structure and low cost comparing with the conventional electrochemical-catalytic converter.

Fig. 1

EP 2 591 843 A1

**Description**

## FIELD OF THE INVENTION

The present invention relates to an electro-catalytictube, particularly to an electro-catalytic tube for controlling exhaust emissions, which adopts to purify a lean-burn exhaust to effectively reduce nitrogen oxides ($NO_x$), carbon monoxide (CO), hydrocarbons (HCs) and particulate matter (PM) in exhaust gas.

## BACKGROUND OF THE INVENTION

Fresh and clean air is essential for human health. Science and technology has promoted economical development. However, the exhausts of vehicles and factories, especially motor vehicles and heavy industry factories, seriously pollutes the air.

The emission standard of motor vehicles has been increased persistently. However, the continuously increasing motor vehicles still bring about more and more serious air pollution. In a motor vehicle, the engine thereof burns fuel and converts chemical energy into mechanical energy. The burning process of fuel generates the polluting constituents, including nitrogen oxides ($NO_x$), carbon monoxide (CO), hydrocarbons (HCs), and particulate matter (PM), which would form photochemical smog, deplete ozone, enhance the greenhouse effect, cause acid rain, damage the ecological environment and finally danger human health.

Carbon monoxide comes from incomplete combustion. The capability of carbon monoxide to combine with hemoglobin to form carboxyhemoglobin (COHb) is 300 times higher than the capability of oxygen to combine with hemoglobin to form oxyhemoglobin ($HbO_2$). Therefore, too high a concentration of carbon monoxide would degrade the capability of hemoglobin to transport oxygen. Nitrogen oxides are generated by the combination of nitrogen and oxygen and mainly in form of nitrogen monoxide (NO) and nitrogen dioxide ($NO_2$). Reaction of nitrogen oxides and hydrocarbons is induced by ultraviolet ray, generating poisonous photochemical smog, which has a special odor, irritates eyes, harm plants, and reduces the visibility of the ambient air. Nitrogen oxides can react with water in the air to form nitric acid and nitrous acid, which are the constituents of acid rain. Hydrocarbons can irritate the respiratory system even at lower concentration and will affect the central nervous system at higher concentration. Particulate matter can danger human health and can even cause cancer.

Therefore, many nations, including EU, USA, Japan and Taiwan, have regulated stricter emission standards for nitrogen oxides, carbon monoxide, hydrocarbons and particulate matter, such as BIN5 of USA and EURO 6 of EU, which not only regulate the emissions of the polluting constituents but also encourage the manufacturers to develop, fabricate or adopt the newest pollution control technologies and apparatuses.

A U.S. Patent No. 5,401,372 disclosed an "Electrochemical Catalytic Reduction Cell for the Reduction of $NO_x$ in an $O_2$-Containing Exhaust Emission", which is dedicated to removing nitrogen oxides, wherein an electrochemical-catalytic reducing reaction and a vanadium pentaoxide ($V_2O_5$) catalyst convert nitrogen oxides into nitrogen. However, the prior art needs an electric source to power an electrochemical cell. Therefore, the prior art consumes power and cannot eliminate other polluting constituents simultaneously.

A U.S. Patent Application No. 13/037,693 disclosed an "Electrochemical-Catalytic Converter for Exhaust Emission Control", which can eliminate nitrogen oxides ($NO_x$), carbon monoxide (CO), hydrocarbons (HCs), and particulate matter (PM) in the exhaust, and which comprises a cell module, wherein the nitrogen oxides are decomposed into nitrogen and oxygen, and wherein carbon monoxide, hydrocarbons, and particulate matter are oxidized into water and carbon dioxide. Therefore, the prior art can eliminate multiple polluting constituents simultaneously without consuming power or reducing gas.

However, the abovementioned "Electrochemical-Catalytic Converter" needs a reducing gas circulating system to perform closed circulation of the reducing gas; this increases the fabrication cost. Besides, the "Electrochemical-Catalytic Converter" is hard to fabricate into a structure compact enough for installation underneath the passenger cars. Therefore, the prior art needs improvement.

## SUMMARY OF THE INVENTION

The primary objective of the present invention is to overcome the problems of the conventional electrochemical-catalytic converter, including bulky volume and high fabrication cost.

To achieve the abovementioned objective, the present invention proposes an electro-catalytic tube, which comprises a tube, an anode layer and a cathode layer. The tube is made of a solid oxide layer, which is formed as a dense microstructure and includes an enclosed chamber, an inner wall formed inside the enclosed chamber, and an outer wall formed outside the enclosed chamber. The enclosed chamber has a reducing environment therein. The anode layer and the cathode layer are respectively coated on the inner wall and the outer wall of the solid oxide layer, wherein the anode layer is made of a first porous material, and the cathode layer is made of a second porous material for purifying a lean-burn exhaust. The reducing environment and the oxidizing environment facilitates an electromotive force to occur between the anode layer and the cathode layer to promote the decomposition of nitrogen oxides of the exhaust into nitrogen and oxygen on the cathode layer

The exhaust passes over the cathode layer for treatment. For the present invention, the exhaust is from lean-burn engines or from lean-burn processes and thus is formed the oxidizing environment. The reducing environment of the enclosed chamber and the oxidizing environment over the cathode layer induce the electromotive force to form between the anode layer and the cathode layer to promote the decomposition of nitrogen oxides. The oxidizing environment of the lean-burn exhaust over the cathode layer enables the oxidation of carbon monoxide, hydrocarbons, and particulate matter of the exhaust.

In the present invention, the electro-catalytic tubes can be stacked to form a honeycomb monolith to be an advanced electrochemical-catalytic converter. This honeycomb has very compact size and uses least amount of materials in comparison to other stacking structures. Thus, the present invention has more compact structure and lower fabrication cost than the prior art of the conventional electrochemical-catalytic converter.

## BRIEF DESCRIPTION OF THE DRAWINGS

Fig.1    is a perspective view schematically showing an electro-catalytic tube according to a first embodiment of the present invention;

Fig.2    is a local sectional view schematically showing an electro-catalytic tube according to the first embodiment of the present invention;

Fig.3    is a diagram schematically showing the assemblage of the electro-catalytic tubes according to a second embodiment of the present invention; and

Fig.4    is a perspective view schematically showing an electro-catalytic tube according to a third embodiment of the present invention.

## DETAILED DESCRIPTION OF THE PREFERRED EMBODIMENTS

The technical contents of the present invention are described in detail in cooperation with drawings below.

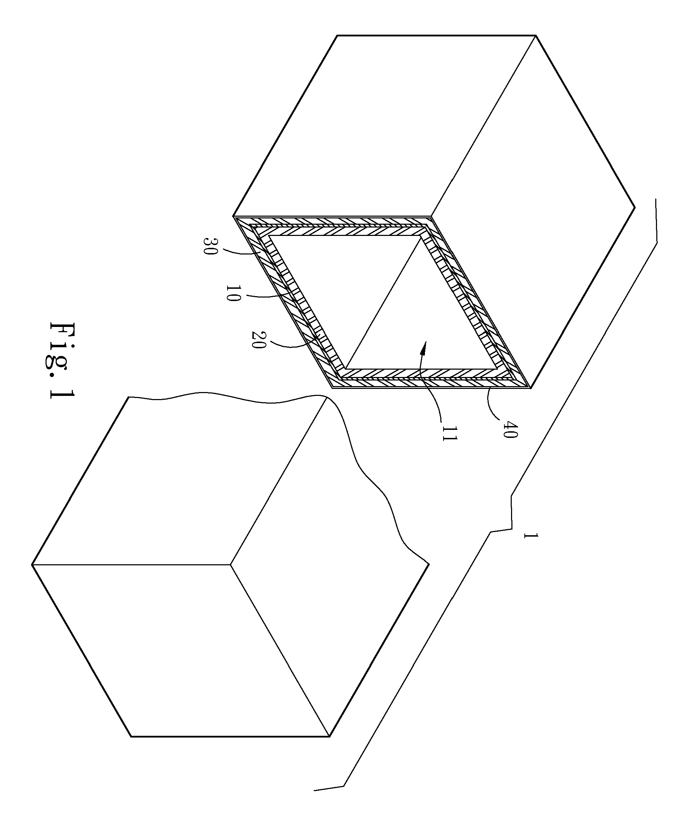

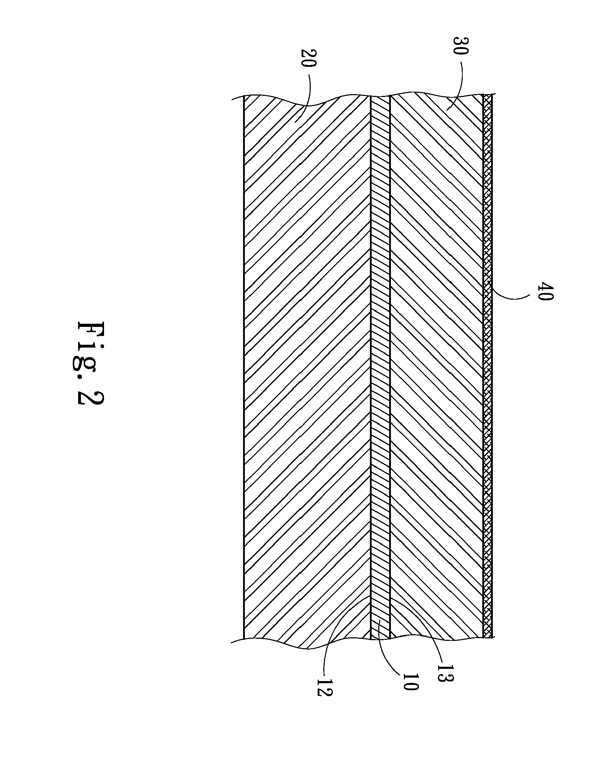

Refer to Fig.1 and Fig.2 respectively a perspective view and a local sectional view schematically showing an electro-catalytic tube 1 for controlling exhaust emissions according to a first embodiment of the present invention. The electro-catalytic tube 1 of the present invention adopts to purify the lean-burn exhaust containing nitrogen oxides, carbon monoxide, hydrocarbons, and particulate matter. The electro-catalytic tube 1 comprises a tube, an anode layer 20 and a cathode layer 30. The tube is made of a solid oxide layer 10. In this embodiment, the solid oxide layer 10 may have an oxygen-ion conductivity. The microstructure of the solid oxide layer 10 is a dense structure and made of a metal oxide, such as a fluorite metal oxide or a perovskite metal oxide, such as YSZ (Yttria-Stabilized Zirconia), stabilized zirconia, GDC (Gadolinia-Doped Ceria), doped ceria, strontium/magnesium-doped lanthanum gallate, and doped lanthanum gallate.

The solid oxide layer 10 includes an inner wall 12 and an outer wall 13 opposite to the inner wall 12. The anode layer 20 is coated on the inner wall 12. In the present invention, the anode layer 20 is made of a first porous material having a plurality of pores. The materials of the anode layer 20 includes a metal, an alloy or a metal oxide, such as a fluorite metal oxides, a perovskite metal oxide, a metal-added fluorite metal oxide, a metal-added perovskite metal oxide, or a combination thereof, such as a Ni-YSZ cermet. The cathode layer 30 is coated on the outer wall 13. In the present invention, the cathode layer 30 is made of a second porous material having a plurality of pores, such as a perovskite metal oxide, a fluorite metal oxide, a metal-added perovskite metal oxide, or a metal-added fluorite metal oxide (e.g. a lanthanum-strontium-cobalt-copper oxide, a lanthanum-strontium-manganese-copper oxide, a combination of a lanthanum-strontium-cobalt-copper oxide and a gadolinia-doped ceria, a combination of a lanthanum-strontium-manganese-copper oxide and a gadolinia-doped ceria, a silver-added lanthanum-strontium-cobalt-copper oxide, a silver-added lanthanum-strontium manganese-copper oxide, a combination of a silver-added lanthanum-strontium-cobalt-copper oxide and a gadolinia-doped ceria, and a combination of a silver-added lanthanum-strontium-manganese-copper oxide and a gadolinia-doped ceria).

The solid oxide layer 10 also includes an enclosed chamber 11 enclosed by the inner wall 12, and wherein the enclosed chamber 11 has a reducing environment therein. In this embodiment, the anode layer 20 is made of a metal oxide. And the metal oxide of the initially fabricated anode layer 20 is reduced to the metal after a treatment with a reducing gas, such as reducing NiO to Ni, or to reduce the metal oxide to an oxygen-deficient metal oxide, so as to form the reducing environment inside the enclosed chamber 11.

Alternatively, in another embodiment, the enclosed chamber 11 may be filled with a carbon species (such as carbon powder) or a reducing gas (such as hydrogen, carbon monoxide and hydrocarbons) to form the reducing environment inside the enclosed chamber 11, or an inert gas (such as argon, helium). Besides, the enclosed chamber 11 can have a vacuum (such as associated with filling the carbon species) or a sub-atmospheric pressure (such as associated with filling the gases), so that possible damage to the structure of the solid oxide layer 10 can be reduced during thermal expansion in the operation. Before the enclosed chamber 11 is sealed, carbon monoxide or hydrocarbons (such as methane, ethane, propane or propylene) is filled into the enclosed chamber 11 to form a carbon species adhering to the pores of the anode layer 20 and assisting in generating the electromotive force. Similarly, the carbon species, the reducing gas, or the inert gas is filled into the enclosed chamber 11 before the enclosed chamber 11 is sealed.

In one embodiment, the electro-catalytic tube 1 further comprises a catalytic oxidation layer 40 to assist in oxidation of the constituents of the exhaust which are hard to oxidize on the cathode layer 30. The catalytic oxidation layer 40 adheres to the cathode layer 30 and is made of a metal, an alloy or a metal oxide, such as a fluorite metal oxide, or a perovskite metal oxide, such as palladium, gadolinia-doped ceria, or lanthanum-strontium-manganese oxide.

Below is described the process of purifying the exhaust. Firstly, place the electro-catalytic tube 1 of the present invention in an environment of the exhaust. The exhaust is a lean-burn exhaust and thus is oxygen-rich and can be further enriched with oxygen via adding a secondary air. The working temperature of the electro-catalytic tube 1 is from ambient temperature to 800°C. The exhaust contains nitrogen oxides, carbon monoxide, hydrocarbons, and particulate matter. The purifying reactions undertaken by the present invention include the decomposition reaction of removing nitrogen oxides and the oxidation reaction of removing carbon monoxide, hydrocarbons, and particulate matter.

Nitrogen oxides include nitrogen monoxide (NO) and nitrogen dioxide ($NO_2$). Nitrogen monoxide is decomposed into nitrogen and oxygen on the cathode layer 30. The reaction of NO decomposition is expressed by Formula (1):

$$2NO \rightarrow N_2 + O_2 \qquad (1)$$

Nitrogen dioxide is decomposed into nitrogen monoxide and oxygen on the cathode layer 30. The reaction of $NO_2$ decomposition is expressed by Formula (2):

$$2NO_2 \rightarrow 2NO + O_2 \qquad (2)$$

Then, nitrogen monoxide is further decomposed into nitrogen and oxygen on the cathode layer 30.

The reducing environment of the enclosed chamber 11 and the oxidizing environment in the cathode layer 30 results in a difference of the oxygen partial pressure between the anode layer 20 and the cathode layer 30 and thus generate an electromotive force (*emf*) between the anode layer 20 and the cathode layer 30 according to

Formula (3):

$$emf = [(RT)/(4F)] \cdot \ln[(P_{O2|Cathode})/(P_{O2|Anode})] \qquad (3)$$

wherein R is the gas constant, T the absolute temperature, F the Faradic constant, and $P_{O2}$ the partial pressure of oxygen. The vacuum or the inert gas in the enclosed chamber 11 (the anode side) can result in a difference of the oxygen partial pressure between the anode layer 20 and the cathode layer 30. The metal, the alloy or the oxygen-deficient metal oxide of the anode layer 20 or the carbon species adhering to the pores of the anode layer 20 is a reducing compound which results in an environment equivalent to a lower oxygen partial pressure over the anode and thus results in the generation of larger electromotive force. Different reducing gases and different reducing compounds on the anode side result in different oxygen partial pressures and thus generate different electromotive forces. Different oxygen concentrations on the cathode side also result in different oxygen partial pressures and thus generate different electromotive forces. The higher the oxygen concentration on the cathode side is, the larger the electromotive force is generated and thus the higher promotion of decomposing nitrogen oxides into oxygen and nitrogen is resulted. Thus, although the lean-burn exhaust is at an oxidizing environment which alone can generate an electromotive force, adding the secondary air into the exhaust results in a larger electromotive force. Within a given temperature range, the lower the temperature is, the higher the decomposition rate is resulted. The decomposition of nitrogen oxides is as effective at ambient temperature as at higher temperature.

As to eliminating carbon monoxide, hydrocarbons and particulate matter of the exhaust, the exhaust is oxygen-rich or can be enriched with oxygen via adding the secondary air. Then, the cathode layer 30 and the catalytic oxidation layer 40 convert carbon monoxide, hydrocarbons, and particulate matter into harmless gases. For example, carbon monoxide is oxidized into carbon dioxide; hydrocarbons (HCs) and particulate matter (carbon-containing) are oxidized into carbon dioxide and water. The reactions thereof are expressed by Formulae (4)-(6):

$$2CO+O_2 \rightarrow 2CO_2 \qquad (4)$$

$$HCs+O_2 \rightarrow H_2O + CO_2 \qquad (5)$$

$$C+O_2 \rightarrow CO_2 \qquad (6)$$

Via the abovementioned catalytic decomposition reactions and catalytic oxidation reactions, the polluting constituents of the exhaust are effectively removed.

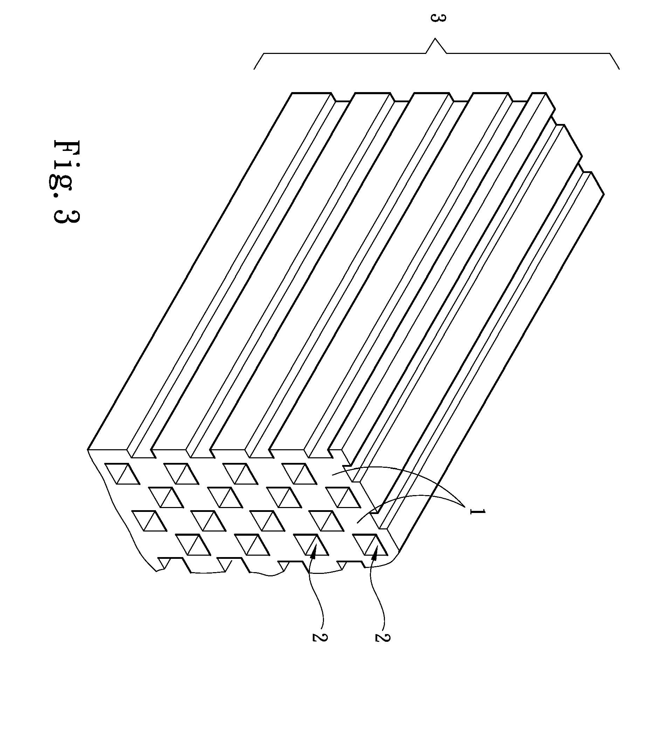

Refer to Fig.3 a diagram schematically showing the assemblage (stacking structure) of the electro-catalytic tubes 1 for controlling exhaust emissions according to a second embodiment of the present invention. In this embodiment, the electro-catalytic tubes 1 are intermittently stacked according to the requirement for purification; between every two adjacent electro-catalytic tubes 1 is formed a gas channel 2 where the exhaust passes and contacts the cathode layer 30 of the electro-catalytic tube 1; thus is established a honeycomb-like structure 3 functioning as an electrochemical-catalytic converter. Thereby, the present invention can purify the exhaust with a compact assemblage of the electro-catalytic tubes 1. In the honeycomb-like structure 3, one half of the channels are sealed to form the electro-catalytic tubes 1, and the other half of the channels (i.e. the gas channels 2) are opened.

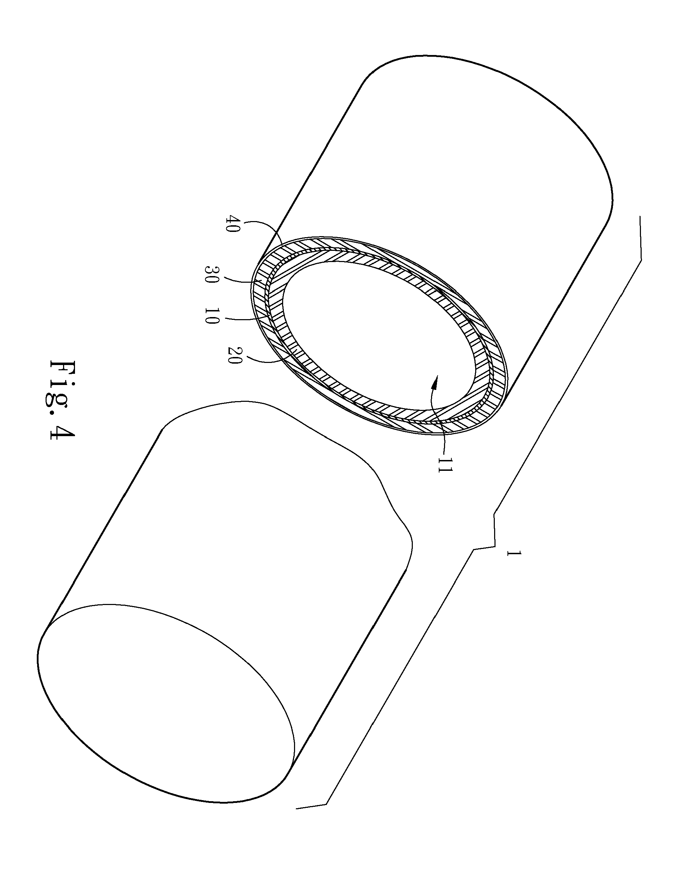

Refer to Fig.4 a diagram schematically showing an electro-catalytic tube for controlling exhaust emissions according to a third embodiment of the present invention. In this embodiment, the electro-catalytic tube 1 is fabricated to have a circular section. However, the present invention does not restrict that the electro-catalytic tube 1 must have a circular section. In the present invention, the electro-catalytic tube 1 may have a rectangular, pentagonal, or hexagonal section according to design.

In conclusion, the present invention uses the difference in the oxygen partial pressures between the enclosed chamber (the anode side) and the cathode side to generate the electromotive force to promote the catalytic decomposition reaction. Further, the present invention has compact structure and lower fabrication cost. Furthermore, the enclosed chamber can have a vacuum or a sub-atmospheric pressure, whereby the present invention is exempted from the structural damage caused by thermally-induced expansion and contraction, wherefore is prolonged the service life of the present invention. Moreover, the electro-catalytic tubes can be assembled to form a honeycomb-like structure, whereby the present invention has a compact assemblage able to be installed underneath the passenger cars for eliminating the polluting constituents of the exhaust and thus reducing air pollution.

Therefore, the present invention possesses utility, novelty and non-obviousness and meets the condition for a patent. Thus, the Inventors file the application for a patent. It is appreciated if the patent is approved fast.

The embodiments described above are only to exemplify the present invention but not to limit the scope of the present invention. Any equivalent modification or variation according to the spirit of the present invention is to be also included within the scope of the present invention.

**Claims**

1. An electro-catalytic tube for controlling exhaust emissions, which is configured for purifying a lean-burn exhaust, comprising:

   a tube, composed of a solid oxide layer, wherein the solid oxide layer is formed as a dense microstructure and includes an enclosed chamber having a reducing environment therein, an inner wall formed inside the enclosed chamber, and an outer wall formed outside the enclosed chamber; and
   an anode layer and a cathode layer respectively coated on the inner wall and the outer wall of the solid oxide layer; wherein the anode layer is made of a first porous material, and the cathode layer is made of a second porous material for purifying the lean-burn exhaust having an oxidizing environment; and
   wherein the reducing environment and the oxidizing environment facilitates an electromotive force to occur between the anode layer and the cathode layer to promote the decomposition of nitrogen oxides of the exhaust into nitrogen and oxygen on the cathode layer.

2. The electro-catalytic tube according to claim 1, wherein the anode layer has a plurality of pores for adhering a carbon species.

3. The electro-catalytic tube according to claim 1 or 2, wherein the enclosed chamber is filled with a material selected from a group consisting of carbon species, reducing gases, inert gases, and combinations thereof.

4. The electro-catalytic tube according to any of the preceding claims, wherein the enclosed chamber has a sub-atmospheric pressure.

5. The electro-catalytic tube according to any of the preceding claims, wherein the solid oxide layer is made of a material selected from a group consisting of, fluorite metal oxides, perovskites metal oxides, and combinations thereof.

6. The electro-catalytic tube according to any of the preceding claims, wherein the anode layer is made of a material selected from a group consisting of cermet of nickel and fluorite metal oxides, perovskite metal oxides, metal-added fluorite metal oxides, metal-added perovskite metal oxides, and combinations thereof.

7. The electro-catalytic tube according to any of the preceding claims, wherein the cathode layer is made of a material selected from a group consisting of perovskite metal oxides, fluorite metal oxides, metal-added perovskite metal oxides, metal-added fluorite metal oxides, and combinations thereof.

8. The electro-catalytic tube according to any of the preceding claims, wherein a catalytic oxidation layer is adhered to the cathode layer.

9. The electro-catalytic tube according to claim 8, wherein the catalytic oxidation layer is made of a material selected from a group consisting of metals, alloys, fluorite metal oxides, perovskite metal oxides, and combinations thereof.

Fig. 1

Fig. 2

Fig. 3

EP 2 591 843 A1

Fig.4

20 10
30
40

11

1

EP 2 591 843 A1

Europäisches
Patentamt
European
Patent Office
Office européen
des brevets

**EUROPEAN SEARCH REPORT**

Application Number

EP 12 18 9565

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 5 306 411 A (MAZANEC TERRY J [US] ET AL) 26 April 1994 (1994-04-26) ----- | 1 | INV. B01D53/32 B01D53/94 |
| A | EP 0 809 313 A2 (NGK INSULATORS LTD [JP]) 26 November 1997 (1997-11-26) ----- | 1 | |
| A | US 2009/084085 A1 (KAWAI HIROYUKI [JP]) 2 April 2009 (2009-04-02) ----- | 1 | |

TECHNICAL FIELDS
SEARCHED        (IPC)

B01D

The present search report has been drawn up for all claims

| Place of search | Date of completion of the search | Examiner |
|---|---|---|
| Munich | 31 January 2013 | Polesak, Helmut |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

**ANNEX TO THE EUROPEAN SEARCH REPORT
ON EUROPEAN PATENT APPLICATION NO.**

EP 12 18 9565

This annex lists the patent family members relating to the patent documents cited in the above-mentioned European search report.
The members are as contained in the European Patent Office EDP file on
The European Patent Office is in no way liable for these particulars which are merely given for the purpose of information.

31-01-2013

| Patent document cited in search report | | Publication date | Patent family member(s) | | Publication date |
|---|---|---|---|---|---|
| US 5306411 | A | 26-04-1994 | NONE | | |
| EP 0809313 | A2 | 26-11-1997 | DE | 69727337 D1 | 04-03-2004 |
| | | | DE | 69727337 T2 | 04-11-2004 |
| | | | EP | 0809313 A2 | 26-11-1997 |
| | | | JP | 3215650 B2 | 09-10-2001 |
| | | | JP | 10040934 A | 13-02-1998 |
| | | | US | 6025084 A | 15-02-2000 |
| | | | US | 2002146611 A1 | 10-10-2002 |
| | | | US | 2007154773 A1 | 05-07-2007 |
| US 2009084085 | A1 | 02-04-2009 | CN | 101394914 A | 25-03-2009 |
| | | | DE | 112007000948 T5 | 26-02-2009 |
| | | | JP | 2007292010 A | 08-11-2007 |
| | | | US | 2009084085 A1 | 02-04-2009 |
| | | | WO | 2007125394 A1 | 08-11-2007 |

EPO FORM P0459

For more details about this annex : see Official Journal of the European Patent Office, No. 12/82

**EP 2 591 843 A1**

**Patent documents cited in the description**

- US 5401372 A

- US 037693 A